# FASCICULE DE BREVET EUROPEEN

(11) **EP 2 965 335 B1**
(45) Date de publication et mention de la délivrance du brevet: **20.06.2018**
(21) Numéro de dépôt: 14718649.8
(22) Date de dépôt: 04.03.2014
(51) Int. Cl.: H01G 11/76, H01G 11/86, H01M 8/16, H01M 4/90, H01M 12/00, H01G 11/36, H01G 11/62

(54) **SUPERCONDENSATEUR ELECTROCHIMIQUE BIOCOMPATIBLE**
BIOKOMPATIBLER ELEKTROCHEMISCHER SUPERKONDENSATOR
BIOCOMPATIBLE ELECTROCHEMICAL SUPERCAPACITOR

(30) Priorité: 07.03.2013 FR 1352046
(43) Date de publication de la demande: 13.01.2016
(73) Titulaire: Centre National de la Recherche Scientifique (Etablissement Public), 75794 Paris (FR); Université Joseph Fourier, 38041 Grenoble Cedex 09 (FR)
(72) Inventeur: COSNIER, Serge, F-38920 Crolles (FR); HOLZINGER, Michael, 38380 Saint-Laurent du Pont (FR); LE GOFF, Alan, F-38190 Laval (FR); AGNES, Charles, F-38100 Grenoble (FR)
(74) Mandataire: Monni, Richard
(86) Numéro de dépôt international: PCT/FR2014/050482
(87) Numéro de publication internationale: WO 2014/135787

(56) Documents cités:
- EP-A1- 2 375 481
- CN-A- 101 573 816

## Description

La présente demande de brevet revendique la priorité de la demande de brevet français FR13/52046.

### Domaine

La présente invention concerne les supercondensateurs électrochimiques.

### Exposé de l'art antérieur

Un supercondensateur est un condensateur qui permet d'obtenir une densité massique de puissance et une densité massique d'énergie intermédiaire entre les batteries et les condensateurs électrolytiques classiques. De façon générale, la densité massique de puissance d'un supercondensateur est comprise entre 1000 et 5000 W/kg, alors que la densité massique de puissance d'un condensateur électrolytique est supérieure à 100000 W/kg et que la densité massique de puissance d'une batterie est inférieure à 150 W/kg et la densité massique d'énergie d'un supercondensateur est comprise entre 0,5 et 30 Wh/kg, alors que la densité massique d'énergie d'un condensateur électrolytique est inférieure à 0,1 Wh/kg et que la densité massique d'énergie d'une batterie est supérieure à 50 Wh/kg. Les supercondensateurs permettent donc de stocker une quantité d'énergie intermédiaire entre les condensateurs électrolytiques classiques et les batteries tout en restituant cette énergie plus rapidement qu'une batterie.

La majorité des supercondensateurs commercialisés actuellement est réalisée selon une structure à double couche électrochimique. De tels supercondensateurs sont généralement appelés EDLC (acronyme anglais pour Electrochemical Double Layer Capacitor).

Un supercondensateur de type EDLC est constitué de deux électrodes poreuses, généralement en charbon actif. Ces électrodes sont imprégnées d'un électrolyte et sont séparées par une membrane isolante et poreuse de façon à permettre la conduction ionique. Deux couches de charges de signes opposés se forment à chaque interface électrode-électrolyte. Un supercondensateur peut donc schématiquement être représenté comme l'association de deux condensateurs en série, l'un à l'électrode positive, la cathode, et l'autre à l'électrode négative, l'anode.

Les supercondensateurs commercialisés actuellement sont chargés électrochimiquement par une source d'énergie électrique externe. Lorsque le supercondensateur est déchargé, il doit donc être connecté à la source d'énergie électrique externe pour être rechargé.

Pour certaines applications, il serait souhaitable de disposer d'un supercondensateur qui puisse être rechargé sans devoir être connecté à une source d'énergie électrique externe. Un exemple d'application est l'utilisation du supercondensateur pour alimenter divers actionneurs, tels que des stimulateurs cardiaques, des sphincters artificiels, ou même des coeurs artificiels. Le supercondensateur doit alors pouvoir être implanté dans un être vivant, animal ou humain, et fonctionner sans devoir être rechargé par une source d'énergie électrique externe.

Les documents CN 101 573 816 et EP 2 375 481 décrivent chacun une bio-cellule formée de l'assemblage d'une bio-cathode et d'une bio-anode.

### Résumé

Un objet d'un mode de réalisation vise à proposer un supercondensateur qui pallie tout ou partie des inconvénients des supercondensateurs usuels.

Selon un autre objet d'un mode de réalisation, le supercondensateur peut se recharger sans devoir être connecté à une source d'énergie électrique externe.

Selon un autre objet d'un mode de réalisation, le supercondensateur est simple à manipuler.

Selon un autre objet d'un mode de réalisation, le supercondensateur est implantable dans un être vivant, animal ou humain.

Pour atteindre tout ou partie de ces objets ainsi que d'autres, on prévoit un supercondensateur destiné à être immergé dans un milieu contenant un matériau biologique et un oxydant, dans lequel l'anode comprend une première enzyme apte à catalyser l'oxydation du matériau biologique et la cathode comprend une deuxième enzyme apte à catalyser la réduction de l'oxydant, et dans lequel chacune des électrodes d'anode et de cathode est constituée d'un agglomérat solide d'un matériau conducteur mélangé à la première ou à la deuxième enzyme, ledit agglomérat ayant une surface spécifique supérieure ou égale à 20 m²/g et une taille moyenne de pore variant de 0,7 nm à 10 µm.

Selon un mode de réalisation, le matériau conducteur est choisi dans le groupe comprenant des nanotubes de carbone, des feuillets de graphène et un mélange de ceux-ci.

Selon un mode de réalisation, le matériau biologique est un sucre et la première enzyme est choisie dans le groupe comprenant l'enzyme glucose oxydase, l'enzyme lactose oxydase, l'enzyme galactose oxydase, l'enzyme fructose oxydase, l'enzyme glucose déshydrogénase et un mélange de celles-ci.

Selon un mode de réalisation, la deuxième enzyme est choisie dans le groupe comprenant l'enzyme polyphénol oxydase (PPO), l'enzyme laccase, l'enzyme bilirubine oxydase et un mélange de celles-ci.

Selon un mode de réalisation, l'anode comprend, en outre, un premier médiateur rédox susceptible d'échanger des électrons avec la première enzyme.

Selon un mode de réalisation, le premier médiateur est choisi dans le groupe comprenant l'ubiquinone, le ferrocène, le cobaltocène, la N-méthyl phénothiazine, l'hydrate d'acide 8-hydroxyquinoline-5-sulfonique (HQS) et un mélange de ceux-ci.

Selon un mode de réalisation, la cathode comprend un deuxième médiateur rédox susceptible d'échanger des électrons avec la deuxième enzyme.

Selon un mode de réalisation, le deuxième médiateur est choisi dans le groupe comprenant la quinone, le ABTS, l'osmocène, le ruthénocène, la tétraphénylporphyrine de cobalt II, la phtalocyanine de zinc et un mélange de ceux-ci.

Selon un mode de réalisation, chaque agglomérat de l'anode et de la cathode est solidaire d'un fil d'électrode.

Selon un mode de réalisation, les électrodes d'anode et de cathode sont entourées chacune d'une membrane semi-perméable laissant passer l'oxydant et le matériau biologique et ne laissant pas passer les première et deuxième enzymes.

Selon un mode de réalisation, l'ensemble des électrodes d'anode et de cathode est entouré d'une membrane semi-perméable laissant passer le matériau biologique et l'oxydant et ne laissant pas passer les première et deuxième enzymes.

On prévoit également un procédé de fabrication d'un supercondensateur, dans lequel l'anode et la cathode sont formées par compression d'un mélange en solution comprenant un matériau conducteur associé à une première ou une deuxième enzyme pour former un agglomérat solide du matériau conducteur mélangé à la première ou à la deuxième enzyme, ledit agglomérat ayant une surface spécifique supérieure ou égale à 20 m²/g et une taille moyenne de pore variant de 0,7 nm à 10 µm.

### Brève description des dessins

Ces caractéristiques et avantages, ainsi que d'autres, sont exposés en détail dans la description suivante de modes de réalisation particuliers faite à titre non limitatif en relation avec les figures jointes parmi lesquelles :
la figure 1 représente très schématiquement un mode de réalisation d'un supercondensateur à électrodes solides ;
la figure 2 est une vue agrandie et schématique de l'anode ou de la cathode du supercondensateur de la figure 1 ;
la figure 3 représente, sous la forme d'un schéma-bloc, un mode de réalisation d'un procédé de fabrication du supercondensateur de la figure 1 ;
la figure 4 représente très schématiquement un autre mode de réalisation d'un supercondensateur ;
la figure 5 illustre un exemple de cycles de charge et de décharge du supercondensateur ;
la figure 6 représente la courbe d'évolution de la tension aux bornes du supercondensateur de la figure 1 en fonction du temps lors de la mise en oeuvre des cycles de charge et de décharge de la figure 5 ;
la figure 7 est une vue agrandie d'une partie de la courbe d'évolution de la figure 6 ;
la figure 8 représente deux courbes d'évolution de la puissance fournie par le supercondensateur en fonction de la tension aux bornes du supercondensateur pour deux modes de réalisation de supercondensateurs ; et
la figure 9 représente une courbe d'évolution de la tension aux bornes du supercondensateur lors d'un apport de carburant biodégradable et en l'absence d'apport de carburant biodégradable.

### Description détaillée

De mêmes éléments ont été désignés par de mêmes références aux différentes figures. Par souci de clarté, seuls les éléments utiles à la compréhension des modes de réalisation décrits ont été représentés et sont détaillés. En particulier, le dispositif de maintien des électrodes l'une par rapport à l'autre n'est pas décrit en détail. Dans la suite de la description, sauf indication contraire, les termes "sensiblement", "environ" et "de l'ordre de" signifient "à 10 % près".

La présente invention concerne un supercondensateur dont la charge est obtenue par conversion en électricité d'une partie de l'énergie disponible dans un substrat biodégradable.

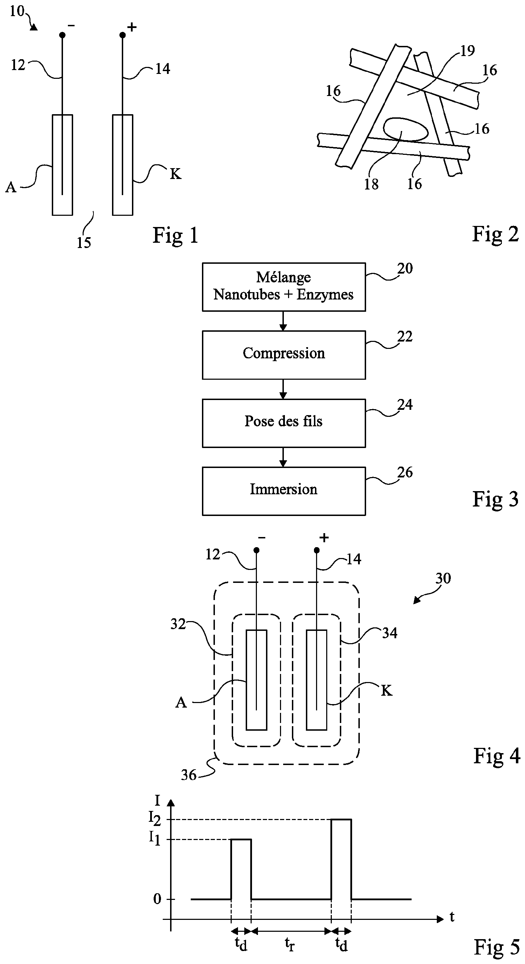

La figure 1 représente un mode de réalisation d'un supercondensateur 10 comprenant un corps d'anode A et un corps de cathode K. Le corps d'anode A est constitué d'un corps solide comprenant un matériau conducteur associé à une enzyme et éventuellement à un médiateur rédox d'anode appropriés. Le corps d'anode A est solidaire d'un fil d'anode 12. De même, le corps de cathode K est constitué d'un corps solide formé d'un conducteur associé à une enzyme et éventuellement à un médiateur rédox de cathode appropriés. Le corps de cathode K est solidaire d'un fil de cathode 14. Les fils d'anode et de cathode 12, 14, par exemple en platine, sont représentés comme pénétrant dans les corps d'anode et de cathode. A titre de variante, ils peuvent simplement être collés à ces corps. Lorsqu'un circuit électrique externe est à alimenter par le supercondensateur 10, le circuit est connecté aux extrémités des fils 12 et 14.

Le corps d'anode A et le corps de cathode K ont chacun :
une taille moyenne de pores comprise entre 0,7 nm et 10 µm, de préférence comprise entre 2 nm et 50 nm ; et
une surface spécifique supérieure ou égale à 20 m²/g, de préférence supérieure ou égale à 400 m²/g et/ou une porosité ouverte comprise entre 20 m²/g et 8000 m²/g, de préférence comprise entre 100 m²/g et 2000 m²/g.

La taille moyenne de pore peut être mesurée par microscopie à balayage électronique (MEB), par microscopie électronique en transmission, par spectroscopie d'impédance, comme cela est décrit notamment dans la publication Electrochimica Acta, volume 44 (1999), pages 3513-3519, ou par la méthode BET. La méthode BET, ou méthode Brunauer, Emmett et Teller, consiste à estimer la surface spécifique, le volume poreux et la taille des pores à partir de la quantité d'azote adsorbée par physisorption.

La surface spécifique peut être mesurée par voltammétrie cyclique, comme cela est décrit notamment dans l'ouvrage intitulé "Electrochemical Methods: Fundamentals and Applications" de A. J. Bard et L. R. Faukner (John Wiley and Sons, New York, 2000), ou par la méthode BET. La porosité ouverte peut être mesurée par la méthode BET.

Le matériau conducteur formant le corps d'anode A et le corps de cathode K a une conductivité électrique supérieure ou égale à 10 S/m, de préférence supérieure ou égale à 1000 S/m. Le matériau conducteur correspond, par exemple, à des nanotubes de carbone, à des feuillets de graphène ou à un mélange de ceux-ci. On appelle nanotube de carbone un tube creux de carbone ayant un diamètre interne variant de 0,7 nm à 2 nm et ayant une longueur variant de quelques centaines de nanomètres à plusieurs millimètres. Il peut comprendre une couche unique d'atomes de carbone ou plusieurs couches d'atomes de carbone. De préférence, la fraction solide du corps d'anode A ou du corps de cathode K comprend plus de 90 % en masse de carbone, plus préférentiellement plus de 95 % en masse de carbone.

En fonctionnement, le corps d'anode A et le corps de cathode K sont placés dans un milieu 15 contenant un électrolyte. Il peut s'agir d'une solution aqueuse, un solvant organique, un gel, une pâte, un polymère, etc. De préférence, le milieu 15 correspond à une solution biologique. De préférence, le corps d'anode A est rapproché le plus possible du corps de cathode K. Toutefois, le corps d'anode A est maintenu à distance du corps de cathode K de façon qu'il ne se forme pas un court-circuit entre le corps d'anode A et le corps de cathode K. De préférence, la distance séparant le corps d'anode A du corps de cathode K varie de quelques micromètres à plusieurs centimètres. Selon un exemple, une épaisseur suffisante d'électrolyte est maintenue entre le corps d'anode A et le corps de cathode K. Selon un autre exemple, une membrane poreuse, constituée d'un matériau qui est un isolant électrique mais qui permet le passage d'ions, peut être interposée entre le corps d'anode A et le corps de cathode K. La membrane poreuse peut être imprégnée de l'électrolyte.

La figure 2 est une vue agrandie et schématique d'un mode de réalisation du corps d'anode ou du corps de cathode. Selon ce mode de réalisation, le corps d'anode ou le corps de cathode comprend un enchevêtrement, ou agglomérat, de nanotubes de carbone et/ou de feuillets de graphène 16 au sein duquel sont dispersées des enzymes 18, une seule enzyme étant représentée en figure 2. Au moins certaines enzymes sont au contact des nanotubes ou feuillets de graphène 16. L'enchevêtrement des nanotubes de carbone et/ou des feuillets de graphène 16 forme des pores ouverts 19 qui permettent la diffusion de l'électrolyte dans le corps d'anode A ou le corps de cathode K.

Les nanotubes de carbone ou les feuillets de graphène peuvent être au moins partiellement recouverts d'un polymère conducteur tel que la polyaniline, le polypropylène, le polyfluorure de vinylidène, le polypyrrole ou le polythiophène. En outre, un traitement d'oxydation ou d'amination des nanotubes de carbone ou des feuillets de graphène peut être réalisé, par exemple par polarisation électrochimique ou par exposition à un plasma d'oxygène ou d'ammoniac. En outre, des particules électroactives à base de métaux de transition peuvent être insérées dans la matrice de matériaux carbonés. Il s'agit, par exemple, de particules d'oxyde de ruthénium (RuO₂), de particules d'oxyde de titane (TiO₂), de particules d'oxyde de chrome (Cr₂O₃), de particules d'oxyde de manganèse (MnO₂), de particules d'oxyde de cobalt (Co₂O₃) ou un mélange de ces particules.

Une enzyme est une protéine qui joue un rôle de catalyseur biologique (ou biocatalyseur), c'est-à-dire de composé qui facilite une réaction biochimique sans en modifier les produits. Au moins l'une des enzymes présentes à l'anode ou à la cathode facilite une réaction biochimique qui conduit à la fourniture d'électrons à partir d'un carburant biologique.

Selon un exemple, l'enzyme présente dans le corps d'anode A est apte à catalyser l'oxydation du sucre et est, par exemple, choisie dans le groupe comprenant l'enzyme glucose oxydase (GOD) si le sucre est du D-glucose, ou stéréoisomère D du glucose, l'enzyme L-fucose déshydrogénase si le sucre est du L-glucose, ou stéréoisomère L du glucose, l'enzyme lactose oxydase si le sucre est du lactose, l'enzyme galactose oxydase si le sucre est du galactose et un mélange de ces enzymes. Un avantage de l'utilisation de l'enzyme glucose oxydase est que l'électrolyte peut correspondre directement à une solution biologique qui contient naturellement du D-glucose, qui est le glucose participant à la glycémie. Selon un autre exemple, l'enzyme présente dans le corps d'anode comprend une enzyme choisie dans le groupe des déshydrogénases en association avec la diaphorase, par exemple la glucose déshydrogénase qui oxyde le glucose et réduit le NAD+ en NADH. Le NAD+ et le NADH correspondent respectivement à la forme oxydée et réduite de la nicotinamide adénine dinucléotide. La diaphorase oxyde le NADH en NAD+ et transfère directement ou via un médiateur rédox les électrons à l'anode.

A titre d'exemple, l'enzyme présente dans le corps de cathode K est apte à catalyser la réduction de l'oxygène et est, par exemple, choisie dans le groupe comprenant l'enzyme polyphénol oxydase (PPO), l'enzyme laccase, l'enzyme bilirubine oxydase, l'enzyme ascorbate oxydase et un mélange de ces enzymes.

Les corps d'anode et de cathode peuvent être implantés à l'intérieur d'un corps végétal, animal ou humain, de nombreux emplacements du corps contenant des fluides contenant du glucose et de l'oxygène.

A titre d'exemple, si on appelle GODox et GODred respectivement la forme oxydée et réduite de l'enzyme glucose oxydase, on observe les réactions suivantes à l'anode :

Glucose + GODox -> Gluconolactone + GODred (1)

GODred -> GODox + 2e⁻ (2)

La réaction (2) traduit le transfert des électrons vers le matériau conducteur carboné du corps d'anode A.

L'enzyme glucose oxydase peut, en outre, entraîner la formation d'eau oxygénée à partir du dioxygène. L'eau oxygénée, qui peut être toxique, peut si nécessaire être dégradée par l'enzyme catalase. Ceci permet de régénérer du dioxygène, protégeant ainsi l'organisme des effets potentiellement toxiques de l'eau oxygénée dans le cas où le supercondensateur est implanté dans un corps animal ou humain.

A titre d'exemple, si on appelle LACox et LACred respectivement la forme oxydée et réduite de l'enzyme laccase, on observe les réactions suivantes à la cathode :

LACred + O₂ + 4H⁺ -> LACox + 2H₂O (3)

LACox + 4e⁻ -> LACred (4)

La réaction (4) traduit le retrait d'électrons du matériau conducteur carboné du corps de cathode K.

Selon un autre mode de réalisation, le corps d'anode A comprend, en outre, un médiateur rédox. Le médiateur rédox a un potentiel rédox bas, mais supérieur au potentiel rédox de l'enzyme présente à l'anode. Il est susceptible d'échanger des électrons avec l'enzyme présente à l'anode et est, par exemple, choisi dans le groupe comprenant des dérivés quinoniques, notamment l'ubiquinone (UQ) ou l'hydrate d'acide 8-hydroxy-quinoline-5-sulfonique (HQS), des complexes organométalliques, notamment le ferrocène ou le cobaltocène, des colorants rédox du type N-méthyl phénothiazine, et un mélange de ces médiateurs.

A titre d'exemple, si on appelle Med1ox et Med1red respectivement la forme oxydée et la forme réduite du médiateur rédox présent dans le corps d'anode A, on observe les réactions suivantes à l'anode :

Glucose + GODox -> Gluconolactone + GODred (1)

GODred + Med1ox -> GODox + Med1red (5)

Med1red -> Med1ox + 2e⁻ (6)

La réaction (6) traduit le transfert des électrons vers le matériau conducteur carboné du corps d'anode A.

Selon un autre mode de réalisation, le corps de cathode K comprend, en outre, un médiateur rédox. Le médiateur rédox a un potentiel rédox haut, mais inférieur au potentiel rédox de l'enzyme présente à la cathode. Il est susceptible d'échanger des électrons avec l'enzyme de cathode et est par exemple choisi dans le groupe comprenant l'hydroquinone (QHD), le 2,2'-azinobis-(3-éthylbenzo-thiazoline-6-sulfonate) (ABTS), l'osmocène, le ruthénocène, le tétraphénylporphyrine de cobalt II, le phtalocyanine de zinc, le tétrathiafulvalène (TTF), le phénanthrènequinone et un mélange de ces médiateurs.

A titre d'exemple, si on appelle Med2ox et Med2red respectivement la forme oxydée et la forme réduite du médiateur rédox présent dans le corps de cathode K, on observe les réactions suivantes à la cathode :

LACred + O₂ + 4H⁺ -> LACox + 2H₂O (3)

LACox + Med2red -> LACred + Med2ox (7)

Med2ox + 4e⁻ -> Med2red (8)

La réaction (8) traduit le retrait d'électrons du matériau carboné conducteur du corps de cathode K, le nombre d'électrons mis en jeu dans la réaction (8) dépendant en fait du type de médiateur rédox utilisé.

Les réactions indiquées précédemment se produisent en permanence aux électrodes lorsqu'aucun potentiel ou aucun courant n'est appliqué aux électrodes, tant que le carburant biologique, par exemple le glucose, est présent à la cathode et le carburant inorganique, par exemple l'oxygène, est présent à l'anode et tant que le matériau carboné peut recevoir ou fournir des électrons. En l'absence de potentiel ou de courant imposé aux électrodes, on observe donc une accumulation de charges négatives dans le matériau carboné conducteur constituant le corps d'anode A et une migration d'ions positifs vers l'anode, par exemple des ions hydronium présents dans l'électrolyte, ces ions s'accumulant en surface du corps d'anode. On observe, en outre, une accumulation de charges positives dans le matériau carboné constituant le corps de cathode K et une migration d'ions négatifs vers la cathode, par exemple des ions hydroxyle présents dans l'électrolyte, ces ions s'accumulant en surface du corps de cathode. La charge du supercondensateur s'arrête lorsque le matériau carboné ne peut plus accepter de charges électriques.

Le supercondensateur est donc auto-rechargeable dans la mesure où la recharge du supercondensateur ne nécessite pas de connecter le supercondensateur à une source d'énergie électrique extérieure.

Les réactions indiquées précédemment ont déjà été décrites dans le cas de biopiles, par exemple dans le document US 2011/0250510. Toutefois, dans le cas de biopiles, les réactions d'oxydation et de réduction précédentes n'ont lieu que lorsqu'une charge est connectée entre les bornes de la biopile. En effet, dans le présent mode de réalisation, les inventeurs ont mis en évidence que lorsque le matériau conducteur qui constitue les corps d'anode et de cathode a des propriétés de taille moyenne de pores, de surface spécifique et de conductivité particulières, on observe un phénomène de stockage de charges au niveau du corps d'anode A et du corps de cathode K en présence des enzymes, éventuellement des médiateurs rédox, du carburant biologique et de l'électrolyte.

En effet, le matériau carboné constituant le corps d'anode et le corps de cathode a une taille moyenne de pore permettant le passage de l'électrolyte, du carburant biologique et éventuellement des médiateurs rédox. Ce matériau a, en outre, une surface spécifique importante, c'est-à-dire une surface d'échange élevée entre le matériau carboné et l'électrolyte, ce qui permet le stockage d'un nombre important de charges. De plus, ce matériau a une conductivité électrique élevée qui permet d'obtenir une puissance spécifique élevée. Enfin, il s'agit d'un matériau stable lors d'une utilisation dans un milieu physiologique.

Les inventeurs ont mis en évidence que lorsque le matériau constituant le corps d'anode ou le corps de cathode n'a pas les propriétés de surface spécifique et de taille moyenne de pores indiquées précédemment, le phénomène de stockage de charges n'est pas présent ou est présent seulement de façon négligeable et ne permet pas d'utiliser le dispositif ni comme condensateur ni comme supercondensateur.

La figure 3 représente, sous la forme d'un schéma-bloc, un mode de réalisation d'un procédé de fabrication d'une électrode du supercondensateur 10 de la figure 1. Le procédé comprend des étapes successives 20, 22, 24 et 26.

A l'étape 20, le matériau constituant le corps d'anode A ou d'électrode K est mélangé aux enzymes et éventuellement au médiateur rédox appropriés.

A l'étape 22, le mélange obtenu à l'étape précédente est comprimé à une pression supérieure ou égale à 500 kg/cm² (49,0 MPa), de préférence supérieure ou égale à 1000 kg/cm² (98,1 MPa) pour obtenir la forme finale souhaitée du corps d'anode A ou du corps de cathode K. A titre d'exemple, le corps d'anode A et/ou le corps de cathode K peuvent avoir la forme d'un cylindre de section droite circulaire.

A l'étape 24, le fil conducteur 12 est fixé au corps d'anode A et le fil conducteur 14 est fixé au corps de cathode K. A titre d'exemple, les fils 12, 14 sont fixés au corps d'anode A et au corps de cathode K par une colle conductrice au carbone et recouverts d'un film de silicone pour renforcer la solidité mécanique de la liaison et le contact électrique. Selon un autre mode de réalisation, les étapes 22 et 24 sont confondues. Chaque fil 12, 14 est alors placé dans le mélange obtenu à l'étape 20 et la tenue du fil 12, 14 dans le corps d'anode ou le corps de cathode est obtenue lors de la compression du matériau carboné autour du fil.

A l'étape 26, le corps d'anode A et le corps de cathode K sont imprégnés du milieu 15 comprenant l'électrolyte et le carburant biologique. A titre d'exemple, le corps d'anode A et le corps de cathode K sont immergés dans le milieu 15.

La figure 4 représente un autre mode de réalisation d'un supercondensateur 30 dans lequel chacun des corps d'anode A et de cathode K est entouré d'une membrane micro-perforée, respectivement 32, 34, telle que des membranes couramment utilisées en dialyse, qui laisse passer le carburant biologique, par exemple le glucose, et l'oxygène et interdit le passage de l'enzyme et du médiateur rédox de plus fort poids moléculaire. Les membranes 32, 34 permettent, de façon avantageuse, de réduire, voire supprimer, les risques de fuite hors du corps d'anode et du corps de cathode du matériau rédox et/ou de l'enzyme au cours du temps. De plus, l'ensemble des électrodes d'anode et de cathode peut être entouré d'une membrane semi-perméable 36 laissant passer le carburant biologique, par exemple le glucose, et l'oxygène et étanche aux enzymes et aux médiateurs rédox, notamment pour éviter que les membranes d'anode et de cathode 32, 34 ne s'obstruent, notamment en cas d'implantation dans un corps animal ou humain.

Les essais suivants ont été réalisés. Une anode a été préparée en mélangeant 200 mg de nanotubes de carbone commercialisé par la société Nanocyl sous l'appellation Multi-Walled Carbon nanotubes NC3100™, 60 mg de l'enzyme glucose oxydase, commercialisée par la société Sigma-Aldrich sous l'appellation G2133™, 60 mg de l'enzyme catalase, commercialisée par la société Sigma-Aldrich sous l'appellation C40™ et 1 ml d'eau dans un mortier de céramique. Une cathode a été préparée de façon similaire en mélangeant 200 mg de nanotubes de carbone, 70 mg de l'enzyme laccase, commercialisée par la société Sigma-Aldrich sous l'appellation 51639™, et 1 ml d'eau dans un mortier de céramique. Les pâtes résultantes nanotubes-enzymes ont été comprimées à une pression de 1000 kg/cm² (98,7 MPa) pour former des cylindres. La surface et l'épaisseur des cylindres étaient respectivement de 1,33 cm² et de 0,1 cm respectivement. Un fil de platine a été fixé par une colle conductrice au carbone d'un côté de chaque disque et recouvert d'un film de silicone. La surface spécifique, mesurée par la méthode BET, des cylindres de nanotubes de carbone était comprise entre 250 et 300 m²/g et la taille moyenne de pore était de 13 nm.

Pour fonctionner en supercondensateur, les corps d'anode et de cathode ont été disposés dans une solution contenant de l'oxygène et un sucre, par exemple du glucose. Les corps d'anode A et de cathode K ont été maintenus dans la solution, une face circulaire du corps d'anode A étant disposée en regard d'une face circulaire du corps de cathode K. Une couche de la solution était présente entre ces deux faces en regard. Dans les essais décrits par la suite, la solution était une solution tampon ayant une concentration molaire de phosphate à 0,2 mol/l, un pH égal à 7 et une concentration molaire de glucose de 0,2 mol/l. La solution a été laissée en contact avec l'air ambiant.

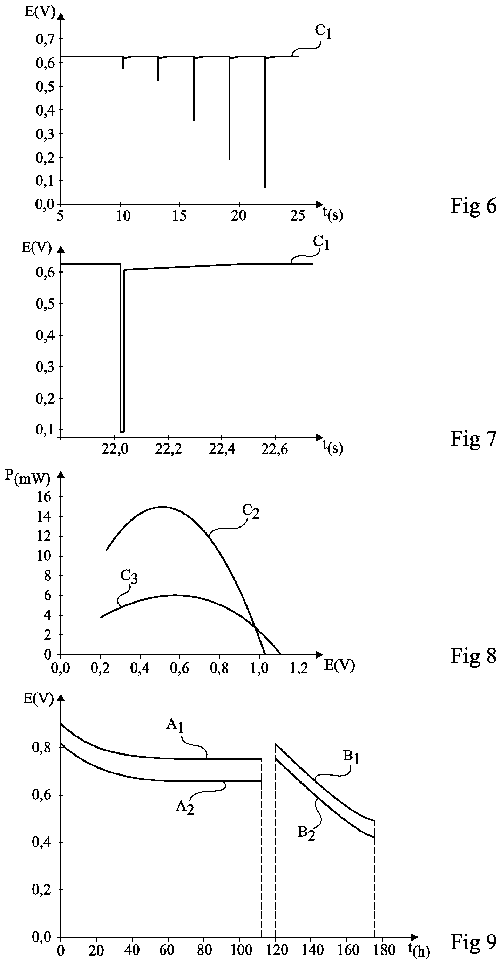

La figure 5 illustre le protocole de réalisation des essais dont les résultats sont illustrés aux figures 6 à 9. On a effectué une succession de cycles, chaque cycle comprenant successivement une phase de charge de durée tᵣ pendant laquelle le supercondensateur 10 était en circuit ouvert et une phase de décharge de durée t_{d} pendant laquelle le supercondensateur 10 était connecté à un circuit électronique. Le circuit électronique comprenait un limiteur de courant de niveau ajustable, de sorte que pendant chaque phase de décharge de durée t_{d}, le courant fourni par le supercondensateur était fixé à une valeur connue qui pouvait être différente d'une phase de décharge à l'autre.

La figure 6 représente une courbe d'évolution C₁ de la tension E aux bornes du supercondensateur en fonction du temps pendant cinq cycles successifs. La figure 7 est une vue agrandie de la figure 6 pour l'un des cycles. La durée t_{d} était égale à 10 ms et la durée tᵣ était égale à 10 s. En figure 6, les phases de décharge ont été réalisées à des courants d'intensités différentes successivement égales à 1 mA, 2 mA, 5 mA, 8 mA et 10 mA. L'écart entre les électrodes était de 1 cm.

Des courants de décharge jusqu'à plus de 10 mA ont été constatés. On a observé une chute de la tension aux bornes du supercondensateur pendant une phase de décharge. Entre deux phases de décharge, la tension aux bornes du supercondensateur s'est stabilisée à une tension sensiblement constante, qui correspondait à la tension en circuit ouvert du supercondensateur. Dans le présent essai, la tension en circuit ouvert était sensiblement de 0,63 V.

Un essai comparatif a été réalisé avec un même dispositif réalisé de façon identique à la différence que les nanotubes de carbone ont été remplacés par des pastilles de graphite ayant un diamètre moyen de 1 cm. Le dispositif obtenu fonctionnait alors seulement comme une pile à combustible pour laquelle la tension en circuit ouvert était sensiblement imposée par les potentiels des couples rédox en présence. On a obtenu dans l'essai comparatif une différence de potentiel à courant nul sensiblement égale à la différence des potentiels rédox des couples rédox présents à l'anode et à la cathode. Il n'y avait donc pas d'effet de stockage de charges dans les corps d'anode et de cathode.

La figure 8 représente deux courbes C₂ et C₃ d'évolution de la puissance P fournie par le supercondensateur en fonction de la tension E pour deux modes de réalisation de supercondensateurs. La courbe C₂ a été obtenue pour un supercondensateur dont les corps d'anode et de cathode étaient distants d'environ 1 cm et la courbe C₃ a été obtenue pour un supercondensateur dont les corps d'anode et de cathode étaient distants d'environ 3 cm. Les courbes C₂ et C₃ mettent en évidence que les puissances atteintes étaient d'autant plus élevées que l'écartement entre les corps d'anode et de cathode était réduit. La puissance maximale pour la courbe C₂ était d'environ 15 mW et correspondait à un courant d'intensité 30 mA et à une tension E d'environ 0,5 V.

La figure 9 représente des courbes d'évolution de la tension aux bornes du supercondensateur lors d'un apport de glucose et en l'absence d'apport de glucose. Plus précisément, les courbes A₁ et A₂ représentent respectivement l'enveloppe supérieure et l'enveloppe inférieure entre lesquelles variait la tension E aux bornes du supercondensateur pour une succession de 40000 cycles de charge et de décharge alors que les corps d'anode et de cathode étaient dans une solution contenant du glucose. Les courbes B₁ et B₂ représentent respectivement l'enveloppe supérieure et l'enveloppe inférieure entre lesquelles variait la tension E aux bornes du supercondensateur pour une succession de 20000 cycles de charge et de décharge alors que les corps d'anode et de cathode étaient introduits dans une solution ne contenant pas de glucose. Le carburant inorganique, c'est-à-dire l'oxygène dans cet essai, était présent de sorte que les réactions décrites précédemment se sont produites à la cathode. Lors de la première partie de l'expérience (40000 premiers cycles), les corps d'anode et de cathode étaient séparés de 2 cm et lors de la seconde partie de l'expérience, en l'absence de glucose (20000 derniers cycles), les corps d'anode et de cathode étaient séparés de 1 cm. Pour chaque cycle de charge et de décharge, la durée t_{d} d'une phase de décharge était de 10 ms, la durée tᵣ d'une phase de charge était de 10 s et le courant de décharge était de 3 mA. Les courbes A₁ et B₁ représentent l'évolution de la tension en circuit ouvert du supercondensateur tandis que les courbes A₁ et B₁ représentent l'évolution de la tension aux bornes du supercondensateur lors de chaque pic de décharge.

Les courbes A₁ et A₂ montrent que, en présence de glucose, un équilibre était obtenu entre les phases de charge et de décharge, ce qui a conduit à une stabilisation de la tension en circuit ouvert. Les courbes B₁ et B₂ montrent que, en l'absence de glucose, le supercondensateur s'est déchargé continûment au fur et à mesure des cycles de décharge.

Divers modes de réalisation avec diverses variantes ont été décrits ci-dessus. On notera que l'homme de l'art pourra combiner divers éléments de ces divers modes de réalisation et variantes sans faire preuve d'activité inventive. En effet, bien qu'il ait été décrit des exemples d'enzymes aptes à catalyser la réduction de l'oxygène à la cathode, il est clair que l'enzyme présente à la cathode peut être apte à catalyser un autre type d'oxydant. Il s'agit, par exemple, de l'enzyme Horseradish Peroxidase qui est apte à catalyser la réduction du péroxyde d'hydrogène (H₂O₂).

## Revendications

1. Supercondensateur (10 ; 30) destiné à être immergé dans un milieu (15) contenant un matériau biologique et un oxydant, **caractérisé en ce que** l'anode (A) comprend une première enzyme apte à catalyser l'oxydation du matériau biologique et la cathode (K) comprend une deuxième enzyme apte à catalyser la réduction de l'oxydant et, dans lequel chacune des électrodes d'anode et de cathode est constituée d'un agglomérat solide d'un matériau conducteur (16) mélangé à la première ou à la deuxième enzyme (18), ledit agglomérat ayant une surface spécifique supérieure ou égale à 20 m²/g et une taille moyenne de pore variant de 0,7 nm à 10 µm.

2. Supercondensateur selon la revendication 1, **caractérisé en ce que** le matériau conducteur (16) est choisi dans le groupe comprenant des nanotubes de carbone, des feuillets de graphène et un mélange de ceux-ci.

3. Supercondensateur selon la revendication 1 ou 2, dans lequel le matériau biologique est un sucre et **caractérisé en ce que** la première enzyme est choisie dans le groupe comprenant l'enzyme glucose oxydase, l'enzyme lactose oxydase, l'enzyme galactose oxydase, l'enzyme fructose oxydase, l'enzyme glucose déshydrogénase et un mélange de celles-ci.

4. Supercondensateur selon l'une quelconque des revendications 1 à 3, **caractérisé en ce que** la deuxième enzyme est choisie dans le groupe comprenant l'enzyme polyphénol oxydase (PPO), l'enzyme laccase, l'enzyme bilirubine oxydase et un mélange de celles-ci.

5. Supercondensateur selon l'une quelconque des revendications 1 à 4, **caractérisé en ce que** l'anode (A) comprend, en outre, un premier médiateur rédox susceptible d'échanger des électrons avec la première enzyme.

6. Supercondensateur selon la revendication 5, **caractérisé en ce que** le premier médiateur est choisi dans le groupe comprenant l'ubiquinone, le ferrocène, le cobaltocène, la N-méthyl phénothiazine, l'hydrate d'acide 8-hydroxyquinoline-5-sulfonique (HQS) et un mélange de ceux-ci.

7. Supercondensateur selon l'une quelconque des revendications 1 à 6, **caractérisé en ce que** la cathode (K) comprend un deuxième médiateur rédox susceptible d'échanger des électrons avec la deuxième enzyme.

8. Supercondensateur selon la revendication 7, **caractérisé en ce que** le deuxième médiateur est choisi dans le groupe comprenant la quinone, le ABTS, l'osmocène, le ruthénocène, la tétraphénylporphyrine de cobalt II, la phtalocyanine de zinc et un mélange de ceux-ci.

9. Supercondensateur selon l'une quelconque des revendications 1 à 8, **caractérisé en ce que** chaque agglomérat de l'anode (A) et de la cathode (K) est solidaire d'un fil d'électrode (12, 14) .

10. Supercondensateur selon l'une quelconque des revendications 1 à 9, **caractérisé en ce que** les électrodes d'anode (A) et de cathode (K) sont entourées chacune d'une membrane semi-perméable (32, 34) laissant passer l'oxydant et le matériau biologique et ne laissant pas passer les première et deuxième enzymes.

11. Supercondensateur selon l'une quelconque des revendications 1 à 10, **caractérisé en ce que** l'ensemble des électrodes d'anode (A) et de cathode (K) est entouré d'une membrane semi-perméable (36) laissant passer le matériau biologique et l'oxydant et ne laissant pas passer les première et deuxième enzymes.

12. Procédé de fabrication d'un supercondensateur (10 ; 30), **caractérisé en ce que** l'anode (A) et la cathode (K) sont formées par compression d'un mélange en solution comprenant un matériau conducteur (16) associé à une première ou une deuxième enzyme pour former un agglomérat solide du matériau conducteur mélangé à la première ou à la deuxième enzyme (18), ledit agglomérat ayant une surface spécifique supérieure ou égale à 20 m²/g et une taille moyenne de pore variant de 0,7 nm à 10 µm.

## Patentansprüche

1. Superkondensator (10; 30) zum Eintauchen in ein Medium (15), das ein biologisches Material und ein Oxidantium enthält, **dadurch gekennzeichnet, dass** die Anode (A) ein erstes Enzym enthält, das in der Lage ist, die Oxidation des biologischen Materials zu katalysieren, und die Kathode (K) ein zweites Enzym enthält, das in der Lage ist, die Reduktion des Oxidantiums zu katalysieren, und wobei jede der Anoden- und Kathodenelektrode aus einem festen Agglomerat aus einem leitenden Material (16) besteht, das mit dem ersten oder mit dem zweiten Enzym (18) gemischt ist, wobei das Agglomerat eine spezifische Oberfläche hat, die größer oder gleich 20 m²/g ist, und eine mittlere Porengröße hat, die von 0,7 nm bis 10 µm variiert.

2. Superkondensator nach Anspruch 1, **dadurch gekennzeichnet, dass** das leitende Material (16) ausgewählt ist aus der Gruppe umfassend Kohlenstoffnanoröhren, Graphenblättchen und ein Gemisch aus diesen.

3. Superkondensator nach Anspruch 1 oder 2, wobei das biologische Material ein Zucker ist und **dadurch gekennzeichnet, dass** das erste Enzym ausgewählt ist aus der Gruppe umfassend das Glucose-Oxidase-Enzym, das Lactose-Oxidase-Enzym, das Galactose-Oxidase-Enzym, das Fructose-Oxidase-Enzym, das Glucose-Dehydrogenase-Enzym und ein Gemisch aus diesen.

4. Superkondensator nach einem der Ansprüche 1 bis 3, **dadurch gekennzeichnet, dass** das zweite Enzym ausgewählt ist aus der Gruppe umfassend das Polyphenol-Oxidase-Enzym (PPO), das Laccase-Enzym, das Bilirubin-Oxidase-Enzym und ein Gemisch aus diesen.

5. Superkondensator nach einem der Ansprüche 1 bis 4, **dadurch gekennzeichnet, dass** die Anode (A), ferner, einen ersten Redoxmediator enthält, der in der Lage ist, Elektronen mit dem ersten Enzym auszutauschen.

6. Superkondensator nach Anspruch 5, **dadurch gekennzeichnet, dass** der erste Mediator ausgewählt ist aus der Gruppe umfassend Ubichinon, Ferrocen, Cobaltocen, N-Methylphenothiazin, 8-Hydroxychinolin-5-Sulfonsäurehydrat (HQS) und ein Gemisch aus diesen.

7. Superkondensator nach einem der Ansprüche 1 bis 6, **dadurch gekennzeichnet, dass** die Kathode (K) einen zweiten Redoxmediator enthält, der in der Lage ist, Elektronen mit dem zweiten Enzym auszutauschen.

8. Superkondensator nach Anspruch 7, **dadurch gekennzeichnet, dass** der zweite Mediator ausgewählt ist aus der Gruppe umfassend Chinon, ABTS, Osmocen, Ruthenocen, Cobalt(II)-Tetraphenylporphyrin, Zink-Phtalocyanin und ein Gemisch aus diesen.

9. Superkondensator nach einem der Ansprüche 1 bis 8, **dadurch gekennzeichnet, dass** jedes Agglomerat der Anode (A) und der Kathode (K) mit einem Elektrodendraht (12, 14) fest verbunden ist.

10. Superkondensator nach einem der Ansprüche 1 bis 9, **dadurch gekennzeichnet, dass** die Anoden (A)- und Kathoden (K) -Elektrode jede von einer halbdurchlässigen Membran (32, 34) umgeben sind, die das Oxidantium und das biologische Material durchlässt und das erste und zweite Enzym nicht durchlässt.

11. Superkondensator nach einem der Ansprüche 1 bis 10, **dadurch gekennzeichnet, dass** die Anordnung aus der Anoden (A)- und Kathoden (K)-Elektrode von einer halbdurchlässigen Membran (36) umgeben ist, die das biologische Material und das Oxidantium durchlässt und das erste und zweite Enzym nicht durchlässt.

12. Verfahren zur Herstellung eines Superkondensator (10; 30), **dadurch gekennzeichnet, dass** die Anode (A) und die Kathode (K) durch Verdichten eines Gemischs in Lösung gebildet sind, das ein leitendes Material (16) in Verbindung mit einem ersten oder einem zweiten Enzym enthält, um ein festes Agglomerat aus dem leitenden Material, das mit dem ersten oder mit dem zweiten Enzym (18) gemischt ist, zu bilden, wobei das Agglomerat eine spezifische Oberfläche hat, die größer oder gleich 20 m²/g ist, und eine mittlere Porengröße hat, die von 0,7 nm bis 10 µm variiert.

## Claims

1. A supercapacitor (10; 30) intended to be immersed in a medium (15) containing a biological material and an oxidizer, **characterized in that** the anode (A) comprises a first enzyme capable of catalyzing the oxidation of the biological material and the cathode (K) comprises a second enzyme capable of catalyzing the reduction of the oxidizer, and wherein each of the anode and cathode electrodes is formed of a solid cluster of a conductive material (16) mixed with the first or with the second enzyme (18), said cluster having a specific surface area greater than or equal to 20 m²/g and an average pore size ranging from 0.7 nm to 10 µm.

2. The supercapacitor of claim 1, wherein the conductive material (16) is selected from the group comprising carbon nanotubes, graphene sheets, and a mixture thereof.

3. The supercapacitor of claim 1 or 2, **characterized in that** the biological material is a sugar and **characterized in that** the first enzyme is selected from the group comprising the glucose oxidase enzyme, the lactose oxidase enzyme, the galactose oxidase enzyme, the fructose oxidase enzyme, the glucose dehydrogenase enzyme, and a mixture thereof.

4. The supercapacitor of any of claims 1 to 3, **characterized in that** the second enzyme is selected from the group comprising the polyphenol oxidase enzyme (PPO), the laccase enzyme, the bilirubin oxidase enzyme, and a mixture thereof.

5. The supercapacitor of any of claims 1 to 4, **characterized in that** the anode (A) further comprises a first redox mediator capable of exchanging electrons with the first enzyme.

6. The supercapacitor of claim 5, **characterized in that** the first mediator is selected from the group comprising ubiquinone, ferrocene, cobaltocene, N-methyl phenothiazine, 8-hydroxyquinoline-5-sulfonic acid hydrate (HQS), and a mixture thereof.

7. The supercapacitor of any of claims 1 to 6, **characterized in that** the cathode (K) further comprises a second redox mediator capable of exchanging electrons with the second enzyme.

8. The supercapacitor of claim 7, **characterized in that** the second mediator is selected from the group comprising quinone, ABTS, osmocene, ruthenocene, cobalt(II) tetraphenylporphyrin, zinc phtalocyanine, and a mixture thereof.

9. The supercapacitor of any of claims 1 to 8, **characterized in that** each cluster of the anode (A) and of the cathode (K) is attached to an electrode wire (12, 14).

10. The supercapacitor of any of claims 1 to 9, **characterized in that** the anode (A) and cathode (K) electrodes are each surrounded with a semipermeable membrane (32, 34) which lets through the oxidizer and the biological material and which does not let through the first and second enzymes.

11. The supercapacitor of any of claims 1 to 10, **characterized in that** the anode (A) and cathode (K) electrodes are altogether surrounded with a semipermeable membrane (36) which lets through the biological material and the oxidizer and which does not let through the first and second enzymes.

12. A method of manufacturing a supercapacitor (10; 30), **characterized in that** the anode (A) and the cathode (K) are formed by compression of a dissolved mixture comprising a conductive material (16) associated with a first or a second enzyme to form a solid cluster of the conductive material mixed with the first or with the second enzyme (18), said cluster having a specific surface area greater than or equal to 20 m²/g and an average pore size ranging from 0.7 nm to 10 µm.
